# EUROPEAN PATENT SPECIFICATION

(11) **EP 4 621 250 B1**
(45) Date of publication and mention of the grant of the patent: **12.08.2026**
(21) Application number: 25192767.9
(22) Date of filing: 16.09.2022
(51) Int. Cl.: F16B 19/10

(54) **SINGLE-SIDE FASTENER**
EINSEITIGER BEFESTIGER
DISPOSITIF DE FIXATION SIMPLE FACE

(30) Priority: 16.09.2021 GB 202113220; 16.09.2021 GB 202113223; 16.09.2021 GB 202113225
(43) Date of publication of application: 24.09.2025
(62) Document number(s) of the earlier application(s) in accordance with Art. 76 EPC: 22789679.2 / 4 402 386
(73) Proprietor: Kwikbolt Limited, Isleworth, TW7 6ER (GB)
(72) Inventor: Niklewicz, Jan, Isleworth, TW7 6ER (GB)
(74) Representative: Williams, Ben

(56) References cited:
- EP-B1- 3 108 148
- US-A1- 2019 211 862
- US-A1- 2020 063 782
- US-A1- 2020 347 867
- US-B2- 10 982 701

## Description

### Field of the Invention

This invention relates in general to the field of fasteners for use in clamping components and, in particular, to a temporary single-sided fastener which can be used in apertures where it is not possible to access the reverse of the components.

### Background of the Invention

Temporary fasteners are used during the fabrication of complex structures such as aircraft frames to align components before permanent fasteners are installed. The number and location of the temporary fastenings will vary between applications, but for a typical wing set, i.e. two complete wings, for a large commercial passenger aircraft, the number of temporary fastenings used can reach around 25,000. It is convenient for such temporary fasteners to be operated from one side of the work-piece only, i.e. to insert and activate the fastener from above the work-piece without having to hold a part of the fastener from the underside of the work-piece, as would be the case for a nut and bolt, because often it is not possible to access both sides of the pieces being clamped simultaneously.

Fasteners that operate from one side are called "blind" fasteners and they typically can have a threaded part that carries a set of expandable legs. In some examples, the legs have protruding heads for applying the clamping load and the legs can be expanded when inserted into an aperture and drawn towards the work-piece by rotation of the threaded part until the desired clamping load is achieved. When the fastener is no longer required, the legs can be retracted to allow removal of the fostered by rotation of the threaded part in the opposite direction.

However, a problem with known fasteners is that the fasteners can be damaged upon removal by over-rotation of the threaded part in the loosening direction. In particular, the use of mechanical means for rotation of the threaded part, e.g. an air impact wrench, can cause damage to the threaded part of the fastener. Existing attempts to solve this problem result in a relative movement between a rotatable head of the threaded portion and a main body of the fastener. Such relative movement can cause difficulty in positioning a rotary tool for rotation of the threaded part, especially for automated systems. A fastener of the prior art is shown in US 2019/211862 A1.

As such, there is a need for an improved single-sided fastener. The present invention aims to address this need.

### Summary of the Invention.

According to a first aspect of the present invention, there is provided a fastener according to claim 1.

According to a second aspect of the present invention, there is provided a method of fastening a work piece according to claim 15.

Optional features are as set out in the dependent claims.

### Brief Description of the Drawings.

For a better understanding of the present invention and to show more clearly how it may be carried into effect, reference will now be made by way of example only, to the accompanying drawings, in which:
Figure 1 is schematic diagram showing the components of a fastener according to a first embodiment;
Figure 2 is a schematic diagram showing a fastener according to the first embodiment in use;
Figure 3 is a schematic diagram showing a fastener according to the first embodiment in use;
Figure 4 is a schematic diagram showing a fastener according to the first embodiment in use;
Figure 5 is a schematic diagram showing a fastener according to a second embodiment in use;
Figure 6 is a schematic diagram showing a fastener according to the second embodiment in use;
Figure 7 is a schematic diagram showing a fastener according to the second embodiment in use;
Figure 8 is a schematic diagram showing a fastener according to a third embodiment in use;
Figure 9 is a schematic diagram showing a fastener according to the third embodiment in use; and
Figure 10 is a schematic diagram showing a fastener according to the third embodiment in use.

### Detailed Description of the Invention.

The present invention relates to a fastener. In particular, the invention relates to a single-sided temporary fastener including a free-spin feature, which can prevent damage to the fastener on removal.

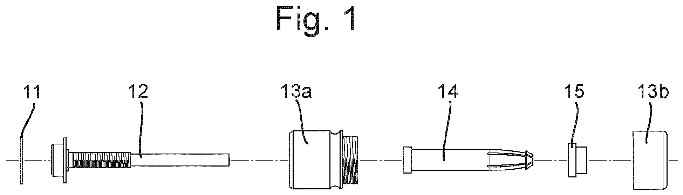

Figure 1 of the accompanying drawings shows a fastener 10 according to a first embodiment, comprising a retaining ring 11, a bolt 12, a first hollow tubular body part 13a, a hollow leg member 14, a spacer element 15 and a second hollow tubular body part 13b. Each of the components has a central axis, about which the component is substantially symmetric. The components are configured to form the fastener 10 when assembled. In some examples, the central axis of each component is aligned when the fastener 10 is assembled. Each of the components has a distal end, defined as the end furthest from the user in normal use, and a proximal end defined as the end closest to the user in normal use. The assembled fastener 10 has a corresponding distal end and proximal end.

The retaining ring 11 has a ring shape with a central opening. In some embodiments, the retaining ring 11 may have a substantially flat profile. In some examples, the retaining ring 11 may be a stamped circlip or a spiral snap ring, e.g. a Spiralox^{®} retaining ring.

The bolt 12 has a substantially cylindrical shape. The bolt 12 has a proximal end and a distal end. The bolt 12 comprises a threaded portion at the proximal end. In some embodiments, the bolt 12 may have an external thread. A thread of the threaded portion may extend radially outwards from a central cylindrical portion. Alternatively, the thread may be cut radially inwards into the central cylindrical portion. The threaded portion of the bolt 12 is configured to engage with a threaded portion of the hollow leg member 14.

In some embodiments, the proximal end of the bolt 12 may have a flange. The flange of the bolt 12 may be configured to engage with the first hollow tubular body part 13a to limit a position of the bolt 12.

The first hollow tubular body part 13a is configured to form a hollow tubular body 13 with the second hollow tubular body part 13b. The first hollow tubular body part 13a may be referred to as a proximal tube. The second hollow tubular body part 13b may be referred to as a cap. In some embodiments, the first hollow tubular body part 13a and second hollow tubular body part 13b may be screwed together. Alternatively, the first hollow tubular body part 13a and second hollow tubular body part 13b by a press-fit, welding, adhesive any other suitable means. In some embodiments, the hollow tubular body 13 is formed as a single piece.

The hollow tubular body 13 has a proximal end and a distal end. The proximal end may be formed by the first hollow tubular body part 13a and the distal end may be formed by the second hollow tubular body part 13b. The distal end of the hollow tubular body 13 may be a flat surface perpendicular to the central axis or may have a conical (or "countersunk") profile. The hollow tubular body 13 has a central axis. In some embodiments, the central axis of the hollow tubular body 13 defines the central axis of the fastener 10. The hollow tubular body 13 has a central opening extending along the central axis from the proximal end to the distal end. The hollow tubular body 13 is configured to receive the retaining ring 11, the bolt 12, the hollow leg member 14 and the spacer element 15 within the central opening.

The hollow leg member 14 has a hollow, substantially cylindrical form. The hollow leg member 14 has a proximal end and a distal end. The hollow leg member 14 comprises a flange at the proximal end, a threaded portion at the proximal end and a plurality of resilient legs at the distal end. The flange extends radially outwards from the proximal end of the flange. In some embodiments, the flange of the hollow leg member 14 may include a flat surface perpendicular to the central axis of the fastener. The flat surface of the flange may face the distal direction.

Each of the resilient legs of the hollow leg member 14 has a head at the distal end. The head may be formed as a flange portion extending radially outwards from the leg. The head of each leg is configured to engage with a work-piece. For example, the head of each leg may be arranged to engage with a distal side of the work piece. As will be described later, the head may be configured to transfer a compressive force to the work piece.

In some embodiments, the resilient legs of the hollow leg member 14, may be formed to extend distally from the distal end of the hollow leg member 14. Alternatively, the legs may be formed by dividing the distal end of the hollow leg member 14. A portion of material may be removed from the hollow leg member 14 between each of the legs.

Each of the resilient legs of the hollow leg member is biased radially inwards towards the central axis. That is, the distal ends of the resilient legs may be angled or curved radially inwards towards the central axis. The resilient legs may be formed of a resilient material such that each of the legs can be deflected inwards or outwards by a deflecting force. Provided the amount of deflection does not exceed a material limit, the resilient legs may be configured to return to the original biased position if the deflecting force is removed. In some examples, the resilient legs may be biased by, for example, inward deflection of the legs beyond the material limit, or by applying heat treatment while the legs are restrained in the biased position, or by any suitable process.

In some embodiments, the spacer element 15 may have a hollow cylindrical form. The spacer element 15 has a proximal end and a distal end. In some examples, the spacer element 15 comprises a flange at the proximal end. The spacer element 15 may be configured to fit around the hollow leg member 14. The spacer element 15 may be configured to fit within the hollow tubular body 13.

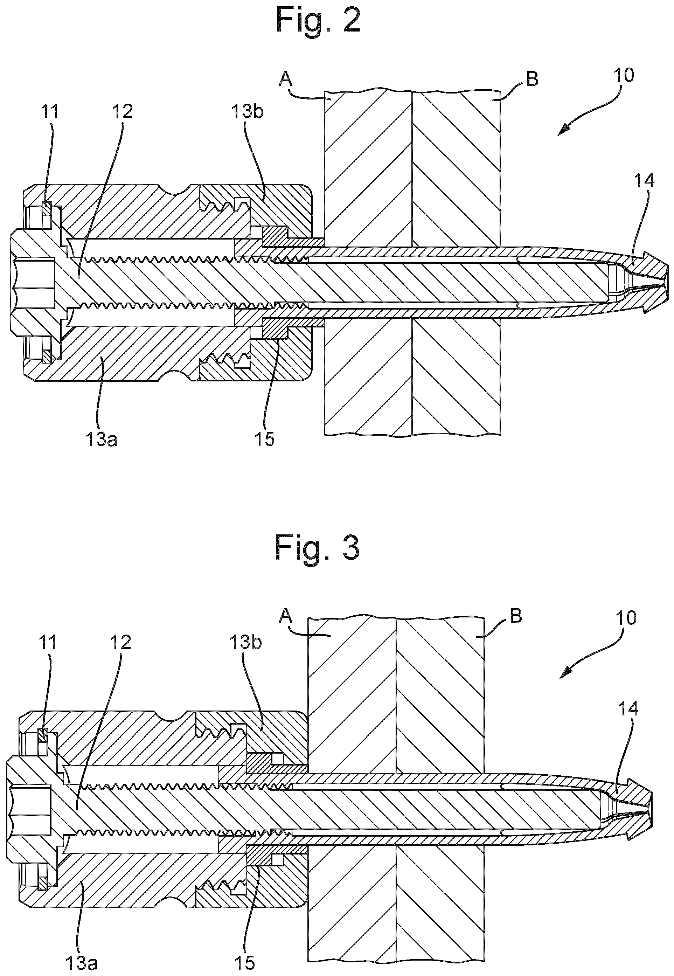

Figure 2 of the accompanying drawings shows the fastener 10 in assembled form. As shown, the central axis of each component is aligned when the fastener 10 is assembled. The fastener 10 is shown in position to clamp a workpiece with two parts, A and B. An opening is prepared through part A and part B. The hollow leg member 14 can pass through the opening, but the hollow tubular body 13 and the spacer element 15 are larger than the opening.

As shown, the first hollow tubular body part 13a may form a hollow tubular body 13 with the second hollow tubular body part 13b. The first hollow tubular body part 13a and second hollow tubular body part 13b may be screwed together.

The hollow tubular body 13 has a proximal end and a distal end. The proximal end may be formed by the first hollow tubular body part 13a and the distal end may be formed by the second hollow tubular body part 13b. The distal end of the hollow tubular body 13 may be a flat surface perpendicular to the central axis or may have a conical (or "countersunk") profile. The hollow tubular body 13 has a central axis. In some embodiments, the central axis of the hollow tubular body 13 defines the central axis of the fastener 10. The hollow tubular body 13 has a central opening extending along the central axis from the proximal end to the distal end. As shown, each of the retaining ring 11, the bolt 12, the hollow leg member 14 and the spacer element 15 are at least partially received within the central opening.

The bolt 12 has a substantially cylindrical form. As shown, the bolt 12 may be arranged within the central opening of the hollow tubular body 13. The bolt 12 may extend by a distance beyond the distal end of the hollow tubular body 13. In some examples, the proximal end (or "head") of the bolt 12 may protrude from the proximal end of the hollow tubular body 13. Alternatively, the head of the bolt 12 may be within the proximal end of the central opening. The proximal end of the bolt 12 may include an engaging element configured to engage with a rotary tool. For example, the head of the bolt 12 may be formed with a polygonal, e.g. hexagonal or square, shape for engagement with a wrench, or may include a socket or recess having a shape for engagement with a socket wrench, key, or screwdriver e.g. a hexagonal, triangular, square, linear, cross or star shaped recess.

According to the invention, the proximal end of the hollow tubular body includes means to block movement of the bolt in a proximal and distal direction. In some embodiments, the proximal end of the bolt 12 may have a flange. The flange may be formed to extend radially outwards from the cylindrical body of the bolt 12. The flange of the bolt 12 may be configured to engage with the first hollow tubular body part 13a to limit a position of the bolt 12. For example, in some embodiments, the hollow tubular body 13 may have a shoulder arranged to block the bolt 12 from moving in a distal direction. As shown, the shoulder be formed in the first hollow tubular body part 13a. The shoulder may be formed to extend radially inwards into the central opening of the hollow tubular body 13. The shoulder may be arranged to engage with the flange of the bolt 12, to fix the bolt in position with respect to the hollow tubular body 13.

In some embodiments, the hollow tubular body 13 may have a retaining means configured to engage with the flange of the bolt 12 and block the bolt 12 from moving in a proximal direction. For example, the first hollow tubular body part 13a may comprise a lip extending radially inwards into the central opening at or near the proximal end. In some embodiments, as shown, the retaining means may be provided by the retaining ring 11.

The retaining ring 11 has a ring shape with a central opening. In some embodiments, the retaining ring 11 may have a substantially flat profile. In some examples, the retaining ring 11 may be a stamped circlip or a spiral snap ring, e.g. a Spiralox retaining ring. As shown, the first hollow tubular body part 13a may comprise a retaining groove arranged to receive the retaining ring 2. The retaining groove may be positioned distally from the shoulder. The retaining ring 11 may be positioned in the retaining groove of the first hollow tubular body part 13a, and the flange of the bolt 12 may be located between the retaining ring 11 and the shoulder of the hollow tubular body 13.

The bolt 12 comprises a threaded portion at the proximal end. In some embodiments, the bolt 12 may have an external thread. A thread of the threaded portion may extend radially outwards from a central cylindrical portion. Alternatively, the thread may be cut radially inwards into the central cylindrical portion. The threaded portion of the bolt 12 is configured to engage with a threaded portion of the hollow leg member 14.

The hollow leg member 14 has a hollow, substantially cylindrical form. The hollow leg member comprises a plurality of resilient legs at the distal end. In some embodiments, the resilient legs of the hollow leg member 14, may be formed to extend distally from the distal end of the hollow leg member 14. Alternatively, the legs may be formed by dividing the distal end of the hollow leg member 14. A portion of material may be removed from the hollow leg member 14 between each of the legs.

As shown, the hollow leg member 14 may be arranged within the central opening of the hollow tubular body 13. The hollow leg member 14 may extend by a distance beyond the distal end of the hollow tubular body 13. The hollow leg member is translatable within the hollow tubular body 13 along the central axis of the hollow tubular body 13.

The hollow leg member 14 comprises a flange at the proximal end. The flange extends radially outwards from the proximal end of the flange. In some embodiments, the flange of the hollow leg member 14 may include a flat surface perpendicular to the central axis of the fastener. The flat surface of the flange may face the distal direction.

The hollow tubular body 13 comprises a stop portion extending radially inwards at the distal end. For example, the second hollow tubular body part 13b may be formed with a lip extending radially inwards into the central opening of the hollow tubular body 13. In some embodiments, the stop portion of the hollow tubular body 13 may have a flat surface perpendicular to the central axis of the fastener. The flat surface of the stop portion may face the proximal direction.

The spacer element 15 may be arranged to abut with the flange of the hollow leg member 14. The spacer element 15 may be configured to fit around a cylindrical portion of the hollow leg member 14 and abut with the distally facing flat surface of the flange. The proximal end of spacer element 15 may include a corresponding flat surface perpendicular to the central axis of the fastener. The distal end of the spacer element 15 may extend distally out of the hollow tubular body 13. A distal surface of the spacer element 15 may be an example of an engaging surface.

The engaging surface extends perpendicular to the central axis of the fastener 10. The engaging surface is arranged distally of the hollow tubular body 13 to engage with a proximal face of the work piece A. The engaging surface is configured, when the engaging surface is urged against the proximal face of the work piece A, to urge the hollow leg member 14 into a position of engagement in which the threaded portion of the hollow leg member 14 is engaged with the threaded portion of the bolt 12.

Each of the resilient legs of the hollow leg member 14 is biased radially inwards towards the central axis. That is, the distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process. As shown, a portion of the resilient legs, which extends beyond the distal end of the bolt 12 may be angled or curved radially inwards.

The hollow leg member 14 is in the most distal position and the distal ends of the legs extend beyond the distal end of the bolt 12. Each of the resilient legs of the hollow leg member 14 is biased radially inwards towards the central axis. As shown, a portion of the resilient legs, which extends beyond the distal end of the bolt 12 may be angled or curved radially inwards. In this way, the head at the distal end of each resilient leg can pass through the openings in the work piece.

The hollow leg member 14 comprises a threaded portion at the proximal end. In some embodiments, the hollow leg member 14 may have an internal thread. For example, the hollow leg member 14 may include a thread extending radially inwards from an inner wall of the hollow cylindrical form. Alternatively, the thread may be cut radially outwards into the inner wall of the hollow cylindrical form.

The threaded portion of the bolt 12 is configured to engage with a threaded portion of the hollow leg member 14. In this way, rotation of the bolt 12 in a first direction draws the hollow leg member 14 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 12 in the first direction, the hollow leg member 14 may be translated in a proximal direction relative to the bolt 12. The hollow leg member 14 may also be translated in a proximal direction relative to the hollow tubular body 13. In some examples, the hollow leg member 14 may be drawn further within the central opening of the hollow tubular body 13. In some examples, the resilient legs of the hollow leg member 14 may be moved in a proximal direction towards or past the distal end of the hollow tubular body 13.

Rotation of the bolt 12 in a second direction opposite to the first direction is configured to translate the hollow leg member 14 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 12 in the second direction, the hollow leg member 14 may be translated in a distal direction relative to the bolt 12. The hollow leg member 14 may also be translated in a distal direction relative to the hollow tubular body 13. In some examples, the hollow leg member 14 may be pushed further out of the central opening of the hollow tubular body 13. In some examples, the resilient legs of the hollow leg member 14 may be moved in a distal direction away from the distal end of the hollow tubular body 13.

The fastener 10 is shown after rotation of the bolt 12 in the second direction. As shown, the hollow leg member 14 is translated in a distal direction relative to the bolt 12. The resilient legs of the hollow leg member 14 extend beyond the distal end of the bolt 12. In this position, the distal end of the bolt 12 does not urge the resilient legs of the hollow leg member radially outwards. In some embodiments, the resilient legs may be formed of a resilient material such that each of the legs can be deflected inwards or outwards by a deflecting force. Provided the amount of deflection caused by the bolt 12 has not exceeded a material limit, the resilient legs may be configured to return to the original biased position when the bolt 12 is removed.

Rotation in the second direction causes the threaded portion of the hollow leg member 14 to disengage from the threaded portion of the bolt 12. As the threaded portion of the bolt 12 is at the proximal end of the bolt 12, the threaded portion of the hollow leg member 14 may be translated distally out of the threaded portion of the bolt 12. In this way, the threaded portion of the hollow leg member 14 can be disengaged from the threaded portion of the bolt 12. In this configuration, the bolt 12 can be freely rotated in the second direction. In this way, damage caused to the fastener by over-rotation of the bolt 12 in the second direction can be avoided.

The proximal end of the spacer element may include a flange. The stop portion arranged of the hollow tubular body 13 may be arranged to engage with the flange of the spacer element 15 and block the spacer element 15 from moving in a distal direction.

In this way, the spacer element 15 and/or the stop portion of the hollow tubular body 13 may be configured to block the hollow leg member 14 from moving in the distal direction. In some embodiments, the distal ends of the legs may extend beyond the distal end of the bolt 12 when the hollow leg member 14 is in the most distal position, as shown in Fig. 2.

Figure 3 of the accompanying drawings shows the fastener 10 in position and ready for clamping. The hollow leg member 14 extends through the openings in part A and part B.

As shown, the fastener 10 is urged against the proximal face of part A until a distal face of the hollow tubular body 13 abuts with the proximal face of part A. The spacer element 15 urges the hollow leg member 14 in a proximal direction relative to the hollow tubular body 13. When the engaging surface of the spacer element 15 is urged against the proximal face of the work piece, the spacer element 15 may be configured to exert a force on the distally facing flat surface of the hollow leg member 14. When the spacer element is urged against the proximal face of the work piece, the proximal end of the spacer element may urge the hollow leg member into the position of engagement.

In this way, the spacer element 15 causes engagement of the threaded portion of the hollow leg member 14 with the threaded portion of the bolt 12. As such, there is no free movement or 'float' along the central axis between the threaded portions. Rotation of the bolt 12 in the first direction will immediately engage the threaded portions. In addition, there is no free movement of the bolt 12 with respect to the hollow tubular body 13. As such, an automatic system may easily locate the head of the bolt 12, and engage a rotary tool to tighten the fastener 10.

In the position of engagement shown, rotation of the bolt 12 in the first direction may cause the threaded portion of the hollow leg member 14 to engage with the threaded portion of the bolt 12. In this way, the spacer element 15 can cause immediate engagement of the threads when required. Movement of the bolt 12 with respect to the hollow tubular body 13 is not required to engage the threads. In this way, there is no movement or 'float' in the distal end of the bolt 12, relative to the hollow tubular body 13. As such, the fastener 10 can enable an automated system to more efficiently locate the head of the bolt 12, and engage a rotary tool to tighten the fastener 10.

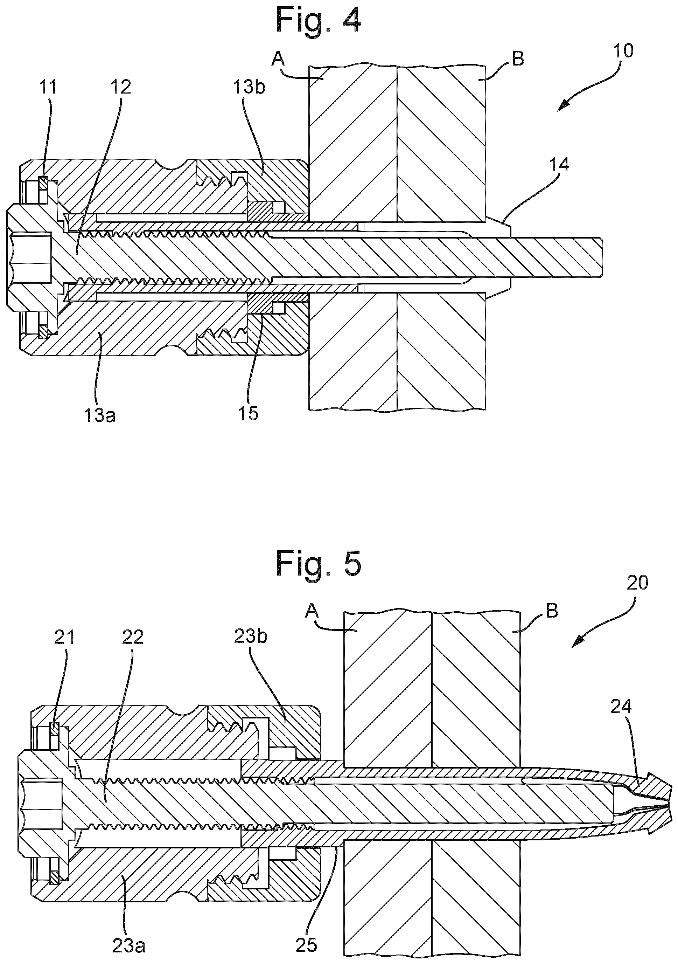

Figure 4 of the accompanying drawings shows the fastener 10 after rotation of the bolt 12 in the first direction. The fastener 10 is shown in a fully clamped position. A compressive force is applied between a distal face of the hollow tubular body 13 and a proximally facing flat surface formed on the resilient legs of the hollow leg member 14.

As shown, the hollow leg member 14 is translated in a proximal direction relative to the bolt 12. The resilient legs of the hollow leg member 14 do not extend beyond the distal end of the bolt 12. In this position, the distal end of the bolt 12 is configured to urge the resilient legs of the hollow leg member radially outwards.

In some embodiments, the resilient legs may be formed of a resilient material such that each of the legs can be deflected inwards or outwards by a deflecting force, e.g. by the bolt 12. Provided the amount of deflection does not exceed a material limit, the resilient legs may be configured to return to the original biased position if the deflecting force is removed.

Each of the resilient legs of the hollow leg member 14 has a head at the distal end. The head may be formed as a flange portion extending radially outwards from the leg. As shown, when the resilient legs are deflected outwards by the bolt 12, the head of each leg may protrude outwards beyond the radial extent of the hollow leg member 14. The head of each leg may protrude outwards beyond the opening in part B. In this configuration, the fastener 10 cannot be withdrawn from the workpiece.

The head of each leg is configured to engage with the work-piece. For example, the head of each leg may be arranged to engage with a distal side of part B and transfer a compressive force to part B. The flange portion forming the head of each leg may include a flat surface, which is presented perpendicular to the central axis and arranged to abut with the distal face of part B.

As described above, the action of the spacer element 15 causes engagement of the threaded portion of the hollow leg member 14 with the threaded portion of the bolt 12, such that rotation of the bolt 12 in the first direction will immediately engage the threaded portions. In this way, a grip range of the fastener 10 can be improved. As soon as the head of each resilient leg can engage a distal face of the work piece, each head exert a compressive force on the work piece. This compressive force can be applied from virtually the most distal position of the hollow leg member 14, as the threaded portions of the fastener 10 are engaged by the action of the spacer element 15.

Figure 5 of the accompanying drawings shows the fastener 20 according to a second embodiment. Elements not described are substantially as described with respect to the first embodiment. The fastener 20 is shown in assembled form. As shown, the central axis of each component is aligned when the fastener 20 is assembled. The fastener 20 is shown in position to clamp a workpiece with two parts, A and B. An opening is prepared through part A and part B. The hollow leg member 24 can pass through the opening, but the hollow tubular body 23 and a proximal end of the hollow leg member 24 are larger than the opening.

As shown, the first hollow tubular body part 23a may form a hollow tubular body 23 with the second hollow tubular body part 23b. The first hollow tubular body part 23a and second hollow tubular body part 23b may be screwed together.

The hollow tubular body 23 has a proximal end and a distal end. The proximal end may be formed by the first hollow tubular body part 23a and the distal end may be formed by the second hollow tubular body part 23b. The distal end of the hollow tubular body 23 may be a flat surface perpendicular to the central axis or may have a conical (or "countersunk") profile. The hollow tubular body 23 has a central axis. In some embodiments, the central axis of the hollow tubular body 23 defines the central axis of the fastener 20. The hollow tubular body 23 has a central opening extending along the central axis from the proximal end to the distal end. As shown, each of the retaining ring 21, the bolt 22, and the hollow leg member 24 are at least partially received within the central opening.

The bolt 22 has a substantially cylindrical form. As shown, the bolt 22 may be arranged within the central opening of the hollow tubular body 23. The bolt 22 may extend by a distance beyond the distal end of the hollow tubular body 23. In some examples, the proximal end (or "head") of the bolt 22 may protrude from the proximal end of the hollow tubular body 23. Alternatively, the head of the bolt 22 may be within the proximal end of the central opening. The proximal end of the bolt 22 may include an engaging element configured to engage with a rotary tool. For example, the head of the bolt 22 may be formed with a polygonal, e.g. hexagonal or square, shape for engagement with a wrench, or may include a socket or recess having a shape for engagement with a socket wrench, key, or screwdriver e.g. a hexagonal, triangular, square, linear, cross or star shaped recess.

According to the invention, the proximal end of the hollow tubular body includes means to block movement of the bolt in a proximal and distal direction. In some embodiments, the proximal end of the bolt 22 may have a flange. The flange may be formed to extend radially outwards from the cylindrical body of the bolt 22. The flange of the bolt 22 may be configured to engage with the first hollow tubular body part 23a to limit a position of the bolt 22. For example, in some embodiments, the hollow tubular body 23 may have a shoulder arranged to block the bolt 22 from moving in a distal direction. As shown, the shoulder be formed in the first hollow tubular body part 23a. The shoulder may be formed to extend radially inwards into the central opening of the hollow tubular body 23. The shoulder may be arranged to engage with the flange of the bolt 22, to fix the bolt in position with respect to the hollow tubular body 23.

In some embodiments, the hollow tubular body 23 may have a retaining means configured to engage with the flange of the bolt 22 and block the bolt 22 from moving in a proximal direction. For example, the first hollow tubular body part 23a may comprise a lip extending radially inwards into the central opening at or near the proximal end. In some embodiments, as shown, the retaining means may be provided by the retaining ring 21.

The retaining ring 21 has a ring shape with a central opening. In some embodiments, the retaining ring 21 may have a substantially flat profile. In some examples, the retaining ring 21 may be a stamped circlip or a spiral snap ring, e.g. a Spiralox retaining ring. As shown, the first hollow tubular body part 23a may comprise a retaining groove arranged to receive the retaining ring 2. The retaining groove may be positioned distally from the shoulder. The retaining ring 21 may be positioned in the retaining groove of the first hollow tubular body part 23a, and the flange of the bolt 22 may be located between the retaining ring 21 and the shoulder of the hollow tubular body 23.

The bolt 22 comprises a threaded portion at the proximal end. In some embodiments, the bolt 22 may have an external thread. A thread of the threaded portion may extend radially outwards from a central cylindrical portion. Alternatively, the thread may be cut radially inwards into the central cylindrical portion. The threaded portion of the bolt 22 is configured to engage with a threaded portion of the hollow leg member 24.

The hollow leg member 24 has a hollow, substantially cylindrical form. The hollow leg member comprises a plurality of resilient legs at the distal end. In some embodiments, the resilient legs of the hollow leg member 24, may be formed to extend distally from the distal end of the hollow leg member 24. Alternatively, the legs may be formed by dividing the distal end of the hollow leg member 24. A portion of material may be removed from the hollow leg member 24 between each of the legs.

As shown, the hollow leg member 24 may be arranged within the central opening of the hollow tubular body 23. The hollow leg member 24 may extend by a distance beyond the distal end of the hollow tubular body 23. The hollow leg member is translatable within the hollow tubular body 23 along the central axis of the hollow tubular body 23.

The hollow leg member 24 may have a step profile 25. The step profile 25 of the hollow leg member 24 may have a larger diameter at the proximal end. In some examples, the step profile 25 may include a flat step surface perpendicular to the central axis of the fastener. The flat step surface of the step profile 25 may face the distal direction. The flat step surface of the step profile 25 may be an example of an engaging surface.

The engaging surface extends perpendicular to the central axis of the fastener 20. The step profile 25 may be formed at a point on the hollow leg member 24 such that the step profile 25 is arranged distally of the hollow tubular body 23 when the hollow leg member 24 is in the most distal position. The engaging surface is arranged distally of the hollow tubular body 23 to engage with a proximal face of the work piece A. The engaging surface is configured, when the engaging surface is urged against the proximal face of the work piece A, to urge the hollow leg member 24 into a position of engagement in which the threaded portion of the hollow leg member 24 is engaged with the threaded portion of the bolt 22.

In some examples, the step profile 25 of the hollow leg member 24 may be referred to as a flange. In some examples, the hollow leg member 24 may also include a flange at the proximal end (not shown), substantially as described with respect to the first embodiment. The stop portion arranged of the hollow tubular body 23 may be arranged to engage with the flange of the hollow leg member 24 and block the hollow leg member 24 from moving in a distal direction.

Each of the resilient legs of the hollow leg member 24 is biased radially inwards towards the central axis. That is, the distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process. As shown, a portion of the resilient legs, which extends beyond the distal end of the bolt 22 may be angled or curved radially inwards.

The hollow leg member 24 is in the most distal position and the distal ends of the legs extend beyond the distal end of the bolt 22. Each of the resilient legs of the hollow leg member 24 is biased radially inwards towards the central axis. As shown, a portion of the resilient legs, which extends beyond the distal end of the bolt 22 may be angled or curved radially inwards. In this way, the head at the distal end of each resilient leg can pass through the openings in the work piece.

The hollow leg member 24 comprises a threaded portion at the proximal end. In some embodiments, the hollow leg member 24 may have an internal thread. For example, the hollow leg member 24 may include a thread extending radially inwards from an inner wall of the hollow cylindrical form. Alternatively, the thread may be cut radially outwards into the inner wall of the hollow cylindrical form.

The threaded portion of the bolt 22 is configured to engage with a threaded portion of the hollow leg member 24. In this way, rotation of the bolt 22 in a first direction draws the hollow leg member 24 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 22 in the first direction, the hollow leg member 24 may be translated in a proximal direction relative to the bolt 22. The hollow leg member 24 may also be translated in a proximal direction relative to the hollow tubular body 23. In some examples, the hollow leg member 24 may be drawn further within the central opening of the hollow tubular body 23. In some examples, the resilient legs of the hollow leg member 24 may be moved in a proximal direction towards or past the distal end of the hollow tubular body 23.

Rotation of the bolt 22 in a second direction opposite to the first direction is configured to translate the hollow leg member 24 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 22 in the second direction, the hollow leg member 24 may be translated in a distal direction relative to the bolt 22. The hollow leg member 24 may also be translated in a distal direction relative to the hollow tubular body 23. In some examples, the hollow leg member 24 may be pushed further out of the central opening of the hollow tubular body 23. In some examples, the resilient legs of the hollow leg member 24 may be moved in a distal direction away from the distal end of the hollow tubular body 23.

The fastener 20 is shown after rotation of the bolt 22 in the second direction. As shown, the hollow leg member 24 is translated in a distal direction relative to the bolt 22. In this position, the step profile 25 is arranged distally of the hollow tubular body 23. The resilient legs of the hollow leg member 24 extend beyond the distal end of the bolt 22. In this position, the distal end of the bolt 22 does not urge the resilient legs of the hollow leg member radially outwards. In some embodiments, the resilient legs may be formed of a resilient material such that each of the legs can be deflected inwards or outwards by a deflecting force. Provided the amount of deflection caused by the bolt 22 has not exceeded a material limit, the resilient legs may be configured to return to the original biased position when the bolt 22 is removed.

Rotation in the second direction causes the threaded portion of the hollow leg member 24 to disengage from the threaded portion of the bolt 22. As the threaded portion of the bolt 22 is at the proximal end of the bolt 22, the threaded portion of the hollow leg member 24 may be translated distally out of the threaded portion of the bolt 22. In this way, the threaded portion of the hollow leg member 24 can be disengaged from the threaded portion of the bolt 22. In this configuration, the bolt 22 can be freely rotated in the second direction. In this way, damage caused to the fastener by over-rotation of the bolt 22 in the second direction can be avoided.

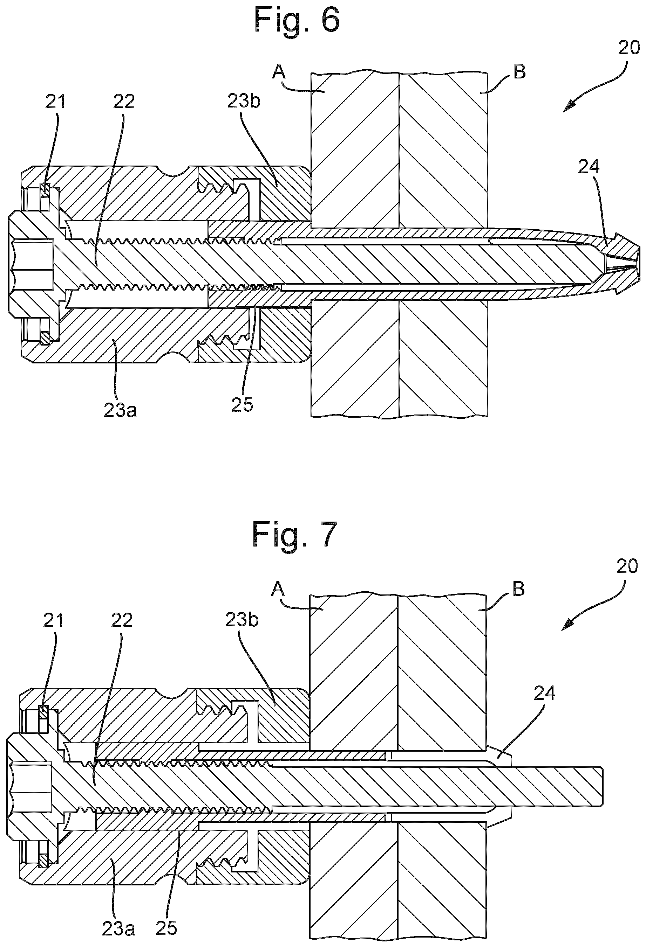

Figure 6 of the accompanying drawings shows the fastener 20 in position and ready for clamping. The hollow leg member 24 extends through the openings in part A and part B.

As shown, the fastener 20 is urged against the proximal face of part A until a distal face of the hollow tubular body 23 abuts with the proximal face of part A. The step profile 25 urges the hollow leg member 24 in a proximal direction relative to the hollow tubular body 23. When the engaging surface of the step profile 25 is urged against the proximal face of the work piece A, the hollow leg member 24 may be moved into the position of engagement.

In this way, the step profile 25 causes engagement of the threaded portion of the hollow leg member 24 with the threaded portion of the bolt 22. As such, there is no free movement or 'float' along the central axis between the threaded portions. Rotation of the bolt 22 in the first direction will immediately engage the threaded portions. In addition, there is no free movement of the bolt 22 with respect to the hollow tubular body 23. As such, an automatic system may easily locate the head of the bolt 22, and engage a rotary tool to tighten the fastener 20.

In the position of engagement shown, rotation of the bolt 22 in the first direction may cause the threaded portion of the hollow leg member 24 to engage with the threaded portion of the bolt 22. In this way, the step profile 25 can cause immediate engagement of the threads when required. Movement of the bolt 22 with respect to the hollow tubular body 23 is not required to engage the threads. In this way, there is no movement or 'float' in the distal end of the bolt 22, relative to the hollow tubular body 23. As such, the fastener 20 can enable an automated system to more efficiently locate the head of the bolt 22, and engage a rotary tool to tighten the fastener 20.

Figure 7 of the accompanying drawings shows the fastener 20 after rotation of the bolt 22 in the first direction. The fastener 20 is shown in a fully clamped position. A compressive force is applied between a distal face of the hollow tubular body 23 and a proximally facing flat surface formed on the resilient legs of the hollow leg member 24.

As shown, the hollow leg member 24 is translated in a proximal direction relative to the bolt 22. The resilient legs of the hollow leg member 24 do not extend beyond the distal end of the bolt 22. In this position, the distal end of the bolt 22 is configured to urge the resilient legs of the hollow leg member radially outwards.

In some embodiments, the resilient legs may be formed of a resilient material such that each of the legs can be deflected inwards or outwards by a deflecting force, e.g. by the bolt 22. Provided the amount of deflection does not exceed a material limit, the resilient legs may be configured to return to the original biased position if the deflecting force is removed.

Each of the resilient legs of the hollow leg member 24 has a head at the distal end. The head may be formed as a flange portion extending radially outwards from the leg. As shown, when the resilient legs are deflected outwards by the bolt 22, the head of each leg may protrude outwards beyond the radial extent of the hollow leg member 24. The head of each leg may protrude outwards beyond the opening in part B. In this configuration, the fastener 20 cannot be withdrawn from the workpiece.

The head of each leg is configured to engage with the work-piece. For example, the head of each leg may be arranged to engage with a distal side of part B and transfer a compressive force to part B. The flange portion forming the head of each leg may include a flat surface, which is presented perpendicular to the central axis and arranged to abut with the distal face of part B.

As described above, the action of the step profile 25 causes engagement of the threaded portion of the hollow leg member 24 with the threaded portion of the bolt 22, such that rotation of the bolt 22 in the first direction will immediately engage the threaded portions. In this way, a grip range of the fastener 20 can be improved. As soon as the head of each resilient leg can engage a distal face of the work piece, each head exert a compressive force on the work piece. This compressive force can be applied from virtually the most distal position of the hollow leg member 24, as the threaded portions of the fastener 20 are engaged by action of the step profile 25.

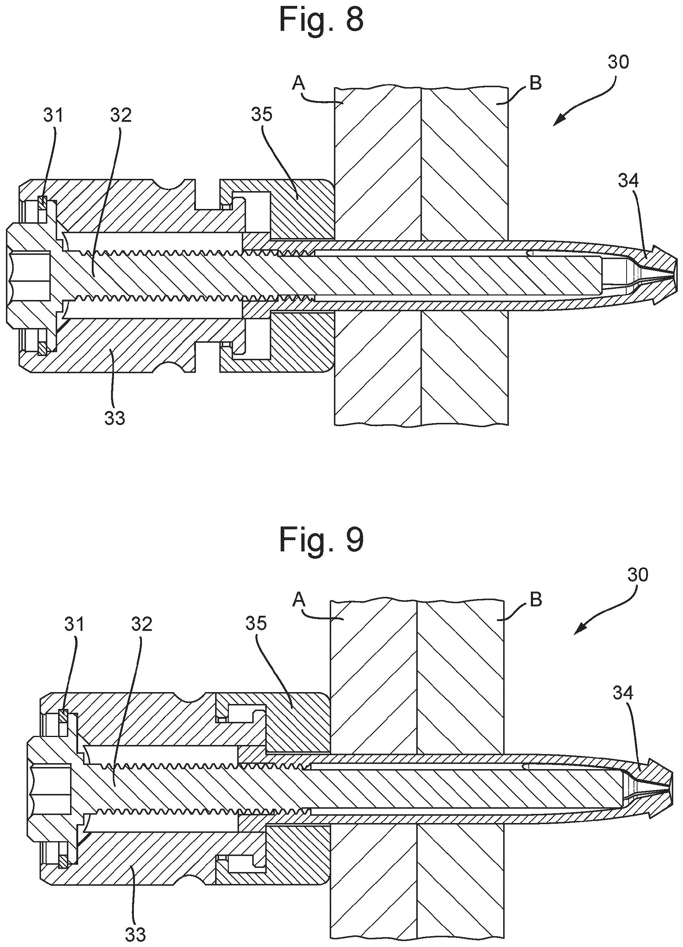

Figure 8 of the accompanying drawings shows the fastener 30 according to a third embodiment. Elements not described are substantially as described with respect to the first embodiment. The fastener 30 is shown in assembled form. As shown, the central axis of each component is aligned when the fastener 30 is assembled. The fastener 30 is shown in position to clamp a workpiece with two parts, A and B. An opening is prepared through part A and part B. The hollow leg member 34 can pass through the opening, but the spacer element 35 is larger than the opening.

As shown, the fastener 30 may comprise a hollow tubular body 33 formed as a single piece. The hollow tubular body 33 has a proximal end and a distal end. The hollow tubular body 33 has a central axis. In some embodiments, the central axis of the hollow tubular body 33 defines the central axis of the fastener 30. The hollow tubular body 33 has a central opening extending along the central axis from the proximal end to the distal end. As shown, each of the retaining ring 31, the bolt 32 and the hollow leg member 34 are at least partially received within the central opening.

The bolt 32 has a substantially cylindrical form. As shown, the bolt 32 may be arranged within the central opening of the hollow tubular body 33. The bolt 32 may extend by a distance beyond the distal end of the hollow tubular body 33. In some examples, the proximal end (or "head") of the bolt 32 may protrude from the proximal end of the hollow tubular body 33. Alternatively, the head of the bolt 32 may be within the proximal end of the central opening. The proximal end of the bolt 32 may include an engaging element configured to engage with a rotary tool. For example, the head of the bolt 32 may be formed with a polygonal, e.g. hexagonal or square, shape for engagement with a wrench, or may include a socket or recess having a shape for engagement with a socket wrench, key, or screwdriver e.g. a hexagonal, triangular, square, linear, cross or star shaped recess.

According to the invention, the proximal end of the hollow tubular body includes means to block movement of the bolt in a proximal and distal direction. In some embodiments, the proximal end of the bolt 32 may have a flange. The flange may be formed to extend radially outwards from the cylindrical body of the bolt 32. The flange of the bolt 32 may be configured to engage with the hollow tubular body 33 to limit a position of the bolt 32. For example, in some embodiments, the hollow tubular body 33 may have a shoulder arranged to block the bolt 32 from moving in a distal direction. The shoulder may be formed to extend radially inwards into the central opening of the hollow tubular body 33. The shoulder may be arranged to engage with the flange of the bolt 32, to fix the bolt in position with respect to the hollow tubular body 33.

In some embodiments, the hollow tubular body 33 may have a retaining means configured to engage with the flange of the bolt 32 and block the bolt 32 from moving in a proximal direction. For example, the hollow tubular body 33 may comprise a lip extending radially inwards into the central opening at or near the proximal end. In some embodiments, as shown, the retaining means may be provided by the retaining ring 31.

The retaining ring 31 has a ring shape with a central opening. In some embodiments, the retaining ring 31 may have a substantially flat profile. In some examples, the retaining ring 31 may be a stamped circlip or a spiral snap ring, e.g. a spiralox retaining ring. As shown, the hollow tubular body 33 may comprise a retaining groove arranged to receive the retaining ring 2. The retaining groove may be positioned distally from the shoulder. The retaining ring 31 may be positioned in the retaining groove of the hollow tubular body 33, and the flange of the bolt 32 may be located between the retaining ring 31 and the shoulder of the hollow tubular body 33.

The bolt 32 comprises a threaded portion at the proximal end. In some embodiments, the bolt 32 may have an external thread. A thread of the threaded portion may extend radially outwards from a central cylindrical portion. Alternatively, the thread may be cut radially inwards into the central cylindrical portion. The threaded portion of the bolt 32 is configured to engage with a threaded portion of the hollow leg member 34.

The hollow leg member 34 has a hollow, substantially cylindrical form. The hollow leg member comprises a plurality of resilient legs at the distal end. In some embodiments, the resilient legs of the hollow leg member 34, may be formed to extend distally from the distal end of the hollow leg member 34. Alternatively, the legs may be formed by dividing the distal end of the hollow leg member 34. A portion of material may be removed from the hollow leg member 34 between each of the legs.

As shown, the hollow leg member 34 may be arranged within the central opening of the hollow tubular body 33. The hollow leg member 34 may extend by a distance beyond the distal end of the hollow tubular body 33. The hollow leg member is translatable within the hollow tubular body 33 along the central axis of the hollow tubular body 33.

The hollow leg member 34 comprises a flange at the proximal end. The flange extends radially outwards from the proximal end of the flange. In some embodiments, the flange of the hollow leg member 34 may include a flat surface perpendicular to the central axis of the fastener. The flat surface of the flange may face the distal direction.

In some embodiments, the spacer element 35 may have a hollow cylindrical form. The spacer element 35 has a proximal end and a distal end. The spacer element 35 may be configured to fit around the hollow leg member 34. The spacer element 35 may be arranged distally of the hollow tubular body 33. At least a portion of the spacer element 25 may be configured to fit around the hollow tubular body 33. For example, the proximal end of the spacer element 35 may include a sleeve portion arranged to fit around the distal end of the hollow tubular body 33. The spacer element 35 is translatable along the central axis with respect to the hollow tubular body 33. For example, the hollow tubular body 33 is translatable along the central axis within the sleeve portion of the spacer element 33.

The spacer element 35 may be arranged to abut with the flange of the hollow leg member 34. The spacer element 35 may be configured to fit around a cylindrical portion of the hollow leg member 34 and abut with the distally facing flat surface of the flange. The spacer element 35 may include a corresponding flat surface perpendicular to the central axis of the fastener 30. The corresponding flat surface of the spacer element 35 may be arranged within the sleeve portion of the spacer element 35. A distal surface of the spacer element 35 may be an example of an engaging surface. The distal end of the spacer element 35 may be a flat surface perpendicular to the central axis or may have a conical (or "countersunk") profile.

The engaging surface extends perpendicular to the central axis of the fastener 30. The engaging surface is arranged distally of the hollow tubular body 33 to engage with a proximal face of the work piece A. The engaging surface is configured, when the engaging surface is urged against the proximal face of the work piece A, to urge the hollow leg member 34 into a position of engagement in which the threaded portion of the hollow leg member 34 is engaged with the threaded portion of the bolt 32.

The hollow tubular body 33 may comprises a stop portion extending radially outwards at the distal end. For example, the hollow tubular body 33 may be formed with a lip extending radially outwards at the distal end. In some embodiments, the stop portion of the hollow tubular body 33 may have a flat surface perpendicular to the central axis of the fastener. The flat surface of the stop portion may face the proximal direction.

The proximal end of the spacer element 35 may include a flange. The flange of the spacer element 35 may extend radially inwards from the proximal end. For example, the flange may extend inwards from the sleeve portion of the spacer element 35. The stop portion of the hollow tubular body 33 may be arranged to engage with the flange of the spacer element 35 and block the spacer element 35 from moving in a distal direction.

In this way, the spacer element 35 and/or the stop portion of the hollow tubular body 33 may be configured to block the hollow leg member 34 from moving in the distal direction.

Each of the resilient legs of the hollow leg member 34 is biased radially inwards towards the central axis. That is, the distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process. As shown, a portion of the resilient legs, which extends beyond the distal end of the bolt 32 may be angled or curved radially inwards.

In some embodiments, the distal ends of the legs may extend beyond the distal end of the bolt 32 when the hollow leg member 34 is in the most distal position, as shown. Each of the resilient legs of the hollow leg member 34 is biased radially inwards towards the central axis. As shown, a portion of the resilient legs, which extends beyond the distal end of the bolt 32 may be angled or curved radially inwards. In this way, the head at the distal end of each resilient leg can pass through the openings in the work piece.

The hollow leg member 34 comprises a threaded portion at the proximal end. In some embodiments, the hollow leg member 34 may have an internal thread. For example, the hollow leg member 34 may include a thread extending radially inwards from an inner wall of the hollow cylindrical form. Alternatively, the thread may be cut radially outwards into the inner wall of the hollow cylindrical form.

The threaded portion of the bolt 32 is configured to engage with a threaded portion of the hollow leg member 34. In this way, rotation of the bolt 32 in a first direction draws the hollow leg member 34 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 32 in the first direction, the hollow leg member 34 may be translated in a proximal direction relative to the bolt 32. The hollow leg member 34 may also be translated in a proximal direction relative to the hollow tubular body 33. In some examples, the hollow leg member 34 may be drawn further within the central opening of the hollow tubular body 33. In some examples, the resilient legs of the hollow leg member 34 may be moved in a proximal direction towards or past the distal end of the hollow tubular body 33.

Rotation of the bolt 32 in a second direction opposite to the first direction is configured to translate the hollow leg member 34 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 32 in the second direction, the hollow leg member 34 may be translated in a distal direction relative to the bolt 32. The hollow leg member 34 may also be translated in a distal direction relative to the hollow tubular body 33. In some examples, the hollow leg member 34 may be pushed further out of the central opening of the hollow tubular body 33. In some examples, the resilient legs of the hollow leg member 34 may be moved in a distal direction away from the distal end of the hollow tubular body 33.

The fastener 30 is shown after rotation of the bolt 32 in the second direction. As shown, the hollow leg member 34 is translated in a distal direction relative to the bolt 32. The resilient legs of the hollow leg member 34 extend beyond the distal end of the bolt 32. In this position, the distal end of the bolt 32 does not urge the resilient legs of the hollow leg member radially outwards. In some embodiments, the resilient legs may be formed of a resilient material such that each of the legs can be deflected inwards or outwards by a deflecting force. Provided the amount of deflection caused by the bolt 32 has not exceeded a material limit, the resilient legs may be configured to return to the original biased position when the bolt 32 is removed.

Rotation in the second direction causes the threaded portion of the hollow leg member 34 to disengage from the threaded portion of the bolt 32. As the threaded portion of the bolt 32 is at the proximal end of the bolt 32, the threaded portion of the hollow leg member 34 may be translated distally out of the threaded portion of the bolt 32. In this way, the threaded portion of the hollow leg member 34 can be disengaged from the threaded portion of the bolt 32. In this configuration, the bolt 32 can be freely rotated in the second direction. In this way, damage caused to the fastener by over-rotation of the bolt 32 in the second direction can be avoided.

Figure 9 of the accompanying drawings shows fastener 30 in position and ready for clamping. The hollow leg member 34 extends through the openings in part A and part B.

As shown, the fastener 30 is urged against the proximal face of part A. For example, the distal face of the spacer element 35 is urged against the proximal face of part A. The hollow tubular body 33 is urged distally and is translated distally relative to the spacer element 35. The spacer element 35 urges the hollow leg member 34 in a proximal direction relative to the hollow tubular body 33. When the engaging surface of the spacer element 35 is urged against the proximal face of the work piece A, the spacer element 35 may be configured to exert a force on the distally facing flat surface of the hollow leg member 34. When the spacer element 35 is urged against the proximal face of the work piece A, the proximal end of the spacer element 35 may urge the hollow leg member 34 into the position of engagement.

In this way, the spacer element 35 causes engagement of the threaded portion of the hollow leg member 34 with the threaded portion of the bolt 32. As such, there is no free movement or 'float' along the central axis between the threaded portions. Rotation of the bolt 32 in the first direction will immediately engage the threaded portions. In addition, there is no free movement of the bolt 32 with respect to the hollow tubular body 33. As such, an automatic system may easily locate the head of the bolt 32, and engage a rotary tool to tighten the fastener 30.

In the position of engagement shown, rotation of the bolt 32 in the first direction may cause the threaded portion of the hollow leg member 34 to engage with the threaded portion of the bolt 32. In this way, the spacer element 35 can cause immediate engagement of the threads when required. Movement of the bolt 32 with respect to the hollow tubular body 33 is not required to engage the threads. In this way, there is no movement or 'float' in the distal end of the bolt 32, relative to the hollow tubular body 33. As such, the fastener 30 can enable an automated system to more efficiently locate the head of the bolt 32, and engage a rotary tool to tighten the fastener 30.

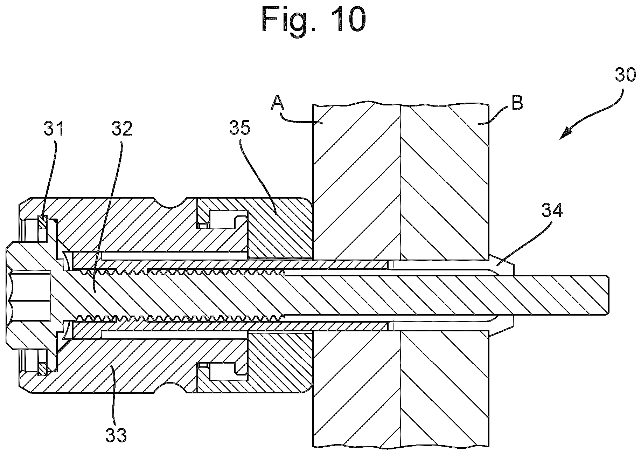

Figure 10 of the accompanying drawings shows the fastener 30 after rotation of the bolt 32 in the first direction. The fastener 30 is shown in a fully clamped position. A compressive force is applied between a distal face of the spacer element 35 and a proximally facing flat surface formed on the resilient legs of the hollow leg member 34.

As shown, the hollow leg member 34 is translated in a proximal direction relative to the bolt 32. The resilient legs of the hollow leg member 34 do not extend beyond the distal end of the bolt 32. In this position, the distal end of the bolt 32 is configured to urge the resilient legs of the hollow leg member radially outwards.

In some embodiments, the resilient legs may be formed of a resilient material such that each of the legs can be deflected inwards or outwards by a deflecting force, e.g. by the bolt 32. Provided the amount of deflection does not exceed a material limit, the resilient legs may be configured to return to the original biased position if the deflecting force is removed.

Each of the resilient legs of the hollow leg member 34 has a head at the distal end. The head may be formed as a flange portion extending radially outwards from the leg. As shown, when the resilient legs are deflected outwards by the bolt 32, the head of each leg may protrude outwards beyond the radial extent of the hollow leg member 34. The head of each leg may protrude outwards beyond the opening in part B. In this configuration, the fastener 30 cannot be withdrawn from the workpiece.

The head of each leg is configured to engage with the work-piece. For example, the head of each leg may be arranged to engage with a distal side of part B and transfer a compressive force to part B. The flange portion forming the head of each leg may include a flat surface, which is presented perpendicular to the central axis and arranged to abut with the distal face of part B.

As described above, the action of the spacer element 35 causes engagement of the threaded portion of the hollow leg member 34 with the threaded portion of the bolt 32, such that rotation of the bolt 32 in the first direction will immediately engage the threaded portions. In this way, a grip range of the fastener 30 can be improved. As soon as the head of each resilient leg can engage a distal face of the work piece, each head exert a compressive force on the work piece. This compressive force can be applied from virtually the most distal position of the hollow leg member 34, as the threaded portions of the fastener 30 are engaged by the action of the spacer element 35.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the invention as defined by the appended claims.

## Claims

1. A fastener comprising;
a hollow tubular body (13, 23, 33) with a proximal end and a distal end and a central axis,
a hollow leg member (14, 24, 34) having a proximal end and a distal end, the leg member being translatable within the body along the central axis of the body, the leg member having a threaded portion at the proximal end and a plurality of resilient legs at the distal end and wherein each leg has a head at the distal end for engaging with a work-piece, and each leg is biased radially inwards towards the central axis,
a bolt (12, 22, 32) having a proximal end and a distal end, with a threaded portion at the proximal end for engaging with the threaded portion of the hollow leg member, such that rotation of the bolt in one direction draws the hollow leg member in a proximal direction along the central axis and rotation in the other direction causes the threaded portion of the hollow leg portion to disengage from the threaded portion of the bolt, wherein the distal end of the bolt is configured to urge the legs radially outward;
the proximal end of the hollow tubular body includes means to block movement of the bolt in a proximal and distal direction
and
an engaging surface perpendicular to the central axis of the fastener arranged distally of the hollow tubular body to engage with a proximal face of the work piece and configured, when the engaging surface is urged against the proximal face of the work piece, to urge the hollow leg member into a position of engagement in which the threaded portion of the hollow leg member is engaged with the threaded portion of the bolt.

2. The fastener of claim 1, further comprising a spacer element (15, 35) which is translatable along the central axis of the body, arranged in abutment with the flange of the hollow leg member and extending distally out of the hollow tubular body, wherein the engaging surface is formed by a distal surface of the spacer element.

3. The fastener of claim 2, wherein the proximal end of the hollow leg member has a flange with a flat surface perpendicular to the central axis of the fastener and the spacer element has a corresponding flat surface perpendicular to the central axis of the fastener.

4. The fastener of claim 2 or claim 3, wherein, when the spacer element is urged against the proximal face of the work piece, a proximal end of the spacer element is configured to urge the hollow leg member into the position of engagement.

5. The fastener of any one of claims 2 to 4, wherein a proximal end of the spacer element has a flange, and the hollow tubular body has a stop portion arranged to engage with the flange of the spacer element and block the spacer element from moving in a distal direction.

6. The fastener of claim 5, wherein the spacer elements is arranged within the hollow tubular body, wherein the flange of the spacer element extends radially outwards and the stop portion of the hollow tubular body extends radially inwards.

7. The fastener of claim 5, wherein at least a portion of the spacer element is arranged outside the hollow tubular body, wherein the flange of the spacer element extends radially inwards and the stop portion of the hollow tubular body extends radially outwards.

8. The fastener of claim 1, wherein the hollow leg member has step profile with a larger diameter at the proximal end and a flat step surface perpendicular to the central axis of the fastener, wherein the engaging surface is formed by the flat step surface of the hollow leg member.

9. The fastener of any preceding claim, wherein the distal ends of the legs extend beyond the distal end of the bolt when the hollow leg member is in the most distal position.

10. The fastener of any preceding claim, wherein the proximal end of the bolt has a flange configured to fix the bolt in position with respect to the hollow body member, and the hollow body member has a shoulder arranged to block the bolt from moving in a distal direction.

11. The fastener of claim 10, wherein the hollow body member has a retaining means configured to engage with the flange of the bolt and block the bolt from moving in a proximal direction.

12. The fastener of any preceding claim, wherein the hollow leg member has an internal thread.

13. The fastener of any preceding claim, wherein the bolt has an external thread.

14. The fastener of any preceding claim, wherein the hollow tubular body is formed in two parts, a proximal tube and a distal cap, which are screwed together.

15. A method of fastening a work piece using the fastener of any preceding claim, comprising:
passing the hollow leg member through an opening in the work piece; and
rotating the bolt in a first direction, where rotation of the bolt in the first direction draws the hollow leg member in a proximal direction along the central axis, until the head of each leg of the hollow leg member engages with the work piece.

## Patentansprüche

1. Befestiger, umfassend;
einen hohlen rohrförmigen Körper (13, 23, 33) mit einem proximalen Ende und einem distalen Ende und einer zentralen Achse,
ein hohles Schenkelelement (14, 24, 34), das ein proximales Ende und ein distales Ende aufweist, wobei das Schenkelelement innerhalb des Körpers entlang der zentralen Achse des Körpers verschiebbar ist, wobei das Schenkelelement einen Gewindeabschnitt an dem proximalen Ende und eine Vielzahl von elastischen Schenkeln an dem distalen Ende aufweist und wobei jeder Schenkel einen Kopf an dem distalen Ende zum Eingreifen mit einem Werkstück aufweist und jeder Schenkel radial nach innen zu der zentralen Achse vorgespannt ist,
einen Bolzen (12, 22, 32), der ein proximales Ende und ein distales Ende aufweist, mit einem Gewindeabschnitt an dem proximalen Ende zum Eingreifen mit dem Gewindeabschnitt des hohlen Schenkelelements, sodass Drehung des Bolzens in einer Richtung das hohle Schenkelelement in einer proximalen Richtung entlang der zentralen Achse zieht und Drehung in der anderen Richtung bewirkt, dass sich der Gewindeabschnitt des hohlen Schenkelabschnittes von dem Gewindeabschnitt des Bolzens löst, wobei das distale Ende des Bolzens dazu konfiguriert ist, die Schenkel radial nach außen zu drängen;
wobei das proximale Ende des hohlen rohrförmigen Körpers Mittel beinhaltet, um Bewegung des Bolzens in einer proximalen und distalen Richtung zu blockieren,
und
eine Eingriffsfläche senkrecht zu der zentralen Achse des Befestigers, die distal zu dem hohlen rohrförmigen Körper angeordnet ist, um mit einer proximalen Seite des Werkstücks einzugreifen, und dazu konfiguriert ist, wenn die Eingriffsfläche gegen die proximale Seite des Werkstücks gedrängt wird, das hohle Schenkelelement in eine Eingriffsposition zu drängen, in welcher der Gewindeabschnitt des hohlen Schenkelelements mit dem Gewindeabschnitt des Bolzens eingegriffen ist.

2. Befestiger nach Anspruch 1, ferner umfassend ein Abstandselement (15, 35), das entlang der zentralen Achse des Körpers verschiebbar ist, in Anlage mit dem Flansch des hohlen Schenkelelements angeordnet ist und sich distal aus dem hohlen rohrförmigen Körper erstreckt, wobei die Eingriffsfläche durch eine distale Fläche des Abstandselements gebildet ist.

3. Befestiger nach Anspruch 2, wobei das proximale Ende des hohlen Schenkelelements einen Flansch mit einer flachen Fläche senkrecht zu der zentralen Achse des Befestigers aufweist und das Abstandselement eine entsprechende flache Fläche senkrecht zu der zentralen Achse des Befestigers aufweist.

4. Befestiger nach Anspruch 2 oder Anspruch 3, wobei, wenn das Abstandselement gegen die proximale Seite des Werkstücks gedrängt wird, ein proximales Ende des Abstandselements dazu konfiguriert ist, das hohle Schenkelelement in die Eingriffsposition zu drängen.

5. Befestiger nach einem der Ansprüche 2 bis 4, wobei ein proximales Ende des Abstandselements einen Flansch aufweist und der hohle rohrförmige Körper einen Anschlagabschnitt aufweist, der dazu angeordnet ist, mit dem Flansch des Abstandselements einzugreifen und zu blockieren, dass sich das Abstandselement in einer distalen Richtung bewegt.

6. Befestiger nach Anspruch 5, wobei das Abstandselement innerhalb des hohlen rohrförmigen Körpers angeordnet ist, wobei sich der Flansch des Abstandselements radial nach außen erstreckt und sich der Anschlagabschnitt des hohlen rohrförmigen Körpers radial nach innen erstreckt.

7. Befestiger nach Anspruch 5, wobei zumindest ein Abschnitt des Abstandselements außerhalb des hohlen rohrförmigen Körpers angeordnet ist, wobei sich der Flansch des Abstandselements radial nach innen erstreckt und sich der Anschlagabschnitt des hohlen rohrförmigen Körpers radial nach außen erstreckt.

8. Befestiger nach Anspruch 1, wobei das hohle Schenkelelement Stufenprofil mit einem größeren Durchmesser an dem proximalen Ende und einer flachen Stufenfläche senkrecht zu der zentralen Achse des Befestigers aufweist, wobei die Eingriffsfläche durch die flache Stufenfläche des hohlen Schenkelelements gebildet ist.

9. Befestiger nach einem vorhergehenden Anspruch, wobei sich die distalen Enden der Schenkel über das distale Ende des Bolzens hinaus erstrecken, wenn das hohle Schenkelelement in der distalsten Position ist.

10. Befestiger nach einem vorhergehenden Anspruch, wobei das proximale Ende des Bolzens einen Flansch aufweist, der dazu konfiguriert ist, den Bolzen in Position in Bezug auf das hohle Körperelement zu fixieren, und das hohle Körperelement eine Schulter aufweist, die dazu angeordnet ist, zu blockieren, dass sich der Bolzen in einer distalen Richtung bewegt.

11. Befestiger nach Anspruch 10, wobei das hohle Körperelement ein Haltemittel aufweist, das dazu konfiguriert ist, mit dem Flansch des Bolzens einzugreifen und zu blockieren, dass sich der Bolzen in einer proximalen Richtung bewegt.

12. Befestiger nach einem vorhergehenden Anspruch, wobei das hohle Schenkelelement ein Innengewinde aufweist.

13. Befestiger nach einem vorhergehenden Anspruch, wobei der Bolzen ein Außengewinde aufweist.

14. Befestiger nach einem vorhergehenden Anspruch, wobei der hohle rohrförmige Körper in zwei Teilen gebildet ist, einem proximalen Rohr und einer distalen Kappe, die miteinander verschraubt sind.

15. Verfahren zum Befestigen eines Werkstücks unter Verwendung des Befestigers nach einem vorhergehenden Anspruch, umfassend:
Führen des hohlen Schenkelelements durch eine Öffnung in dem Werkstück; und
Drehen des Bolzens in einer ersten Richtung, wobei Drehung des Bolzens in der ersten Richtung das hohle Schenkelelement in einer proximalen Richtung entlang der zentralen Achse zieht, bis der Kopf jedes Schenkels des hohlen Schenkelelements mit dem Werkstück eingreift.

## Revendications

1. Dispositif de fixation comprenant :
un corps tubulaire creux (13, 23, 33) avec une extrémité proximale et une extrémité distale et un axe central,
un élément de patte creux (14, 24, 34) présentant une extrémité proximale et une extrémité distale, l'élément de patte étant déplaçable en translation à l'intérieur du corps le long de l'axe central du corps, l'élément de patte présentant une partie filetée au niveau de l'extrémité proximale et une pluralité de pattes élastiques au niveau de l'extrémité distale et dans lequel chaque patte présente une tête au niveau de l'extrémité distale destinée à venir en prise avec une pièce de fabrication, et chaque patte est sollicitée radialement vers l'intérieur en direction de l'axe central,
un boulon (12, 22, 32) présentant une extrémité proximale et une extrémité distale, avec une partie filetée au niveau de l'extrémité proximale destinée à venir en prise avec la partie filetée de l'élément de patte creux, de sorte qu'une rotation du boulon dans une direction tire l'élément de patte creux dans une direction proximale le long de l'axe central et une rotation dans l'autre direction amène la partie filetée de la partie de patte creuse à se libérer de la partie filetée du boulon, dans lequel l'extrémité distale du boulon est conçue pour pousser les pattes radialement vers l'extérieur ;
l'extrémité proximale du corps tubulaire creux comprend des moyens pour bloquer le mouvement du boulon dans une direction proximale et distale
et
une surface de mise en prise perpendiculaire à l'axe central du dispositif de fixation disposée de manière distale par rapport au corps tubulaire creux pour venir en prise avec une face proximale de la pièce de fabrication et conçue pour, lorsque la surface de mise en prise est poussée contre la face proximale de la pièce de fabrication, pousser l'élément de patte creux dans une position de mise en prise dans laquelle la partie filetée de l'élément de patte creux est mise en prise avec la partie filetée du boulon.

2. Dispositif de fixation selon la revendication 1, comprenant en outre un élément d'espacement (15, 35) qui est déplaçable en translation le long de l'axe central du corps, agencé en butée avec la bride de l'élément de patte creux et s'étendant distalement hors du corps tubulaire creux, dans lequel la surface de mise en prise est formée par une surface distale de l'élément d'espacement.

3. Dispositif de fixation selon la revendication 2, dans lequel l'extrémité proximale de l'élément de patte creux présente une bride avec une surface plate perpendiculaire à l'axe central du dispositif de fixation et l'élément d'espacement présente une surface plate correspondante perpendiculaire à l'axe central du dispositif de fixation.

4. Dispositif de fixation selon la revendication 2 ou la revendication 3, dans lequel, lorsque l'élément d'espacement est poussé contre la face proximale de la pièce de fabrication, une extrémité proximale de l'élément d'espacement est conçue pour pousser l'élément de patte creux dans la position de mise en prise.

5. Dispositif de fixation selon l'une quelconque des revendications 2 à 4, dans lequel une extrémité proximale de l'élément d'espacement présente une bride, et le corps tubulaire creux présente une partie de butée agencée pour venir en prise avec la bride de l'élément d'espacement et empêcher l'élément d'espacement de se déplacer dans une direction distale.

6. Dispositif de fixation selon la revendication 5, dans lequel les éléments d'espacement sont agencés à l'intérieur du corps tubulaire creux, dans lequel la bride de l'élément d'espacement s'étend radialement vers l'extérieur et la partie de butée du corps tubulaire creux s'étend radialement vers l'intérieur.

7. Dispositif de fixation selon la revendication 5, dans lequel au moins une partie de l'élément d'espacement est agencée à l'extérieur du corps tubulaire creux, dans lequel la bride de l'élément d'espacement s'étend radialement vers l'intérieur et la partie de butée du corps tubulaire creux s'étend radialement vers l'extérieur.

8. Dispositif de fixation selon la revendication 1, dans lequel l'élément de patte creux présente un profil de marche avec un diamètre plus grand au niveau de l'extrémité proximale et une surface de marche plate perpendiculaire à l'axe central du dispositif de fixation, dans lequel la surface de mise en prise est formée par la surface de marche plate de l'élément de patte creux.

9. Dispositif de fixation selon l'une quelconque des revendications précédentes, dans lequel les extrémités distales des pattes s'étendent au-delà de l'extrémité distale du boulon lorsque l'élément de patte creux se trouve dans la position la plus distale.

10. Dispositif de fixation selon l'une quelconque des revendications précédentes, dans lequel l'extrémité proximale du boulon présente une bride conçue pour maintenir le boulon en position par rapport à l'élément de corps creux, et l'élément de corps creux présente un épaulement agencé pour empêcher le boulon de se déplacer dans une direction distale.

11. Dispositif de fixation selon la revendication 10, dans lequel l'élément de corps creux présente un moyen de retenue conçu pour venir en prise avec la bride du boulon et empêcher le boulon de se déplacer dans une direction proximale.

12. Dispositif de fixation selon l'une quelconque des revendications précédentes, dans lequel l'élément de patte creux présente un filetage interne.

13. Dispositif de fixation selon l'une quelconque des revendications précédentes, dans lequel le boulon présente un filetage externe.

14. Dispositif de fixation selon l'une quelconque des revendications précédentes, dans lequel le corps tubulaire creux est formé en deux pièces, un tube proximal et un capuchon distal, qui sont vissés ensemble.

15. Procédé de fixation d'une pièce de fabrication à l'aide du dispositif de fixation selon l'une quelconque des revendications précédentes, comprenant :
le passage de l'élément de patte creux à travers une ouverture dans la pièce de fabrication ; et
la rotation du boulon dans une première direction, où une rotation du boulon dans la première direction tire l'élément de patte creux dans une direction proximale le long de l'axe central, jusqu'à ce que la tête de chaque patte de l'élément de patte creux vienne en prise avec la pièce de fabrication.
